Europäisches Patentamt

European Patent Office

Office européen des brevets

(11) Veröffentlichungsnummer: **0 174 527**
**B1**

(12) **EUROPÄISCHE PATENTSCHRIFT**

(45) Veröffentlichungstag der Patentschrift: **13.06.90**

(21) Anmeldenummer: **85110506.4**

(22) Anmeldetag: **21.08.85**

(51) Int. Cl.⁵: **B 29 D 22/00,** B 29 C 65/02,
B 29 C 35/02

(54) Verfahren zur Herstellung eines aufblasbaren Hohlkörpers.

(30) Priorität: **08.09.84 DE 3433113**
**25.09.84 DE 3435157**

(43) Veröffentlichungstag der Anmeldung:
**19.03.86 Patentblatt 86/12**

(45) Bekanntmachung des Hinweises auf die
Patenterteilung:
**13.06.90 Patentblatt 90/24**

(84) Benannte Vertragsstaaten:
**DE FR IT**

(56) Entgegenhaltungen:
EP-A-0 012 848        GB-A- 937 194
FR-A- 770 232        US-A-2 429 123
FR-A-1 520 470        US-A-3 205 114
GB-A- 628 037        US-A-3 383 265

**Die Akte enthält technische Angaben, die nach
dem Eingang der Anmeldung eingereicht
wurden und die nicht in dieser Patentschrift
enthalten sind.**

(73) Patentinhaber: **METZELER Gesellschaft mit
beschränkter Haftung
Gneisenaustrasse 15
D-8000 München 50 (DE)**

(72) Erfinder: **Härtel, Volker, Dr.
Fichtenstrasse 50
D-8034 Germering (DE)**
Erfinder: **Höglinger, Gerhard
Zinnkopfstrasse 7
D-8200 Rosenheim (DE)**
Erfinder: **Schreiber, Hans
Dr.-Werner-Strasse 42
D-8038 Gröbenzell (DE)**

(74) Vertreter: **Michelis, Theodor, Dipl.-Ing.
Gneisenaustrasse 15
D-8000 München 50 (DE)**

Courier Press, Leamington Spa, England.

## Beschreibung

Die Erfindung bezieht sich auf ein Verfahren zur Herstellung eines aufblasbaren Hohlkörpers aus einem über Polfäden beabstandeten Doppelgewebe, bei dem auf die Ober- und Unterbahn des Doppelgewebes eine gasdichte Kautschukbahn aufgelegt wird, die Ränder des Doppelgewebes mit einem Haftvermittler versehen und mit Winkelbändern verbunden werden, und der Hohlkörper unter Vakuum ausvulkanisiert wird.

Ein Hohlkörper aus einem derartigen, im allgemeinen als Polgewebe bezeichnetem Doppelgewebe ist im Prinzip aus der DE-B-21 48 401 bekannt, wie es insbesondere zur Herstell- ung von Schlauchbooten dient. Dabei bereitete es bisher stets erhebliche Schwierigkeiten, die Ober- und Unterbahn des Polgewebes mit einer gasdichten Kautschukbahn zu verbinden und diese Kauschukbahn fest mit den Bahnen des Doppelgewebes zu verkleben, ohne daß es zu unschönen Faltenbildungen oder Verschiebungen der einzelnen Lagen zueinander beim Anrollen der Lagen aufeinander kam.

Ferner ist es aus der FR-A-1 520 470 bekannt, ein Druckkissen aus mit Kautschuk getränkten Glasfaserbahnen während der Vulkanisation innen und außen mit einem Vakuum zu beaufschlagen, um bei Entstehen von Gasblasen im zu vulkanisierenden Material diese sofort absaugen zu können. Damit soll auch eine schnellere Vulkanisation erreicht werden.

Der vorliegenden Erfindung liegt demgegenüber die Aufgabe zugrunde, ein Verfahren zur Herstellung eines derartigen aufblasbaren Hohlkörpers aus einem Doppelgewebe anzugeben, bei dem auf einfache Weise hohe Anpreßkräfte auf die einzelnen zu verbindenden Lagen und Teile erreicht werden, so daß bei einer Reihe von Kautschukbelegmischungen sogar die Kleberlösungen wegfallen können.

Zur Lösung dieser Aufgabe ist erfindungsgemäß vorgesehen, daß der Innenraum des vorkonfektionierten, noch unvulkanisierten Hohlkörpers für einen Zeitraum bis zum Erreichen der gewünschten Diffusionslängen des Kautschuks evakuiert und der Hohlkörper anschließend im evakuierten Zustand ausvulkanisiert wird.

Durch dieses Evakuieren über einen längeren Zeitraum wird erreicht, daß der Kautschuk der aufgelegten Bahn in das Gewebe hineindiffundiert und somit eine innige, blasenfreie Beschichtung erreicht wird, wobei nach bekannten Gsetzmäßigkeiten die Diffusionslängen linear mit der Wurzel aus der Kontaktzeit anwachsen.

Zweckmäßigerweise wird dabei die Luft über ein in die Wandung des Hohlkörper eingesetztes, wärmestandfestes und vakuumdichtes Ventil abgesaugt.

Zur zusätzlichen Festigkeitserhöhung kann die Kautschukbahn selbst noch mit einem Gewebe verstärkt sein.

Ein Ausführungsbeispiel des erfindungsgemäßen Verfahrens wird im folgenden im einzelnen beschrieben.

Das zur Herstellung des Hohlkörpers verwendete Doppelgewebe, dessen beide Gewebebahnen durch senkrecht dazu verlaufende Fäden auf Abstand gehalten werden, weist den Vorteil auf, daß dadurch Teile mit parallelen Flächen konstanten Abstandes erhalten werden können, die sich insbesonere für die Böden oder die Seitenwände von Luftbooten eignen. Bei der Verwendung eines derartigen Doppelgewebes müssen jedoch Ober- und Unterbahn zur luftdichten Ausrüstung mit gasdichten Deckschichten aus Kautschuk oder herkömmlichem beschichtetem Gewebe belegt werden, wobei diese Deckschichten bisher in einem besonders aufwendigen Verfahren mit den Doppelgewebebahnen verbunden werden mußten.

Nach dem erfindungsgemäßen Verfahren werden diese Kautschukbahnen, die gegebenenfalls gewebeverstärkt sein können, einfach auf die Ober- und Unterbahn des Doppelgewebes aufgelegt. Die Ränder der entsprechenden Zuschnitte werden entweder durch Verwendung von Winkelbändern, die zwischen Ober- und Unterbahn eingelegt werden, oder durch einfaches Aufeinanderlegen der Ränder miteinander verklebt. In beiden Fällen werden die zu verbindenden Flächen mit einem Haftvermittler eingestrichen. Anschließend werden die Deckplatten und das Doppelgewebe sowie die zu verbindenden Ränder mit einer Anpreßrolle kurz vorgepreßt und in das vorhandene Ventilloch ein wärmestandfestes und vakuumdichtes Ventil eingesetzt. Beim anschließenden Evakuieren des Hohlraums dieses Hohlkörpers werden alle Lufteinschlüsse im Gewebe und an den Nähten, insbesondere aber auch zwischen der Deckgummierung und den Doppelgewebeschichten, vollständig entfernt. Nach Aufbau des Vakuums wird das vakuumdichte Ventil wieder verschlossen, so daß der erzeugte Unterdruck im Hohlkörper aufrecht erhalten bleibt. Durch die Durckdifferenz von 10 N/cm² werden die Gewebeschichten fest miteinander verpreßt. Durch entsprechend lange Kontaktzeiten unter diesem Druck wird dabei ein vollständiges Verfließen und Ineinanderdiffundieren der zu verschweißenden Belegschichten erreicht. Je länger dabei die Kontaktzeit ist, umso tiefer kann die Kautschukschicht ineinanderdiffundieren, wobei die Eindringtiefe wiederum die Festigkeit von Naht und Klebeverbindung beeinflußt. Die erforderliche Kontaktzeit ist dabei abhängig von Stärke und Aufbau des Doppelgewebes, von der Viskosität des aufgelegten Kautschuks und der gewünschten Diffusionslänge, d.h. wie weit der Kautschuk in das Gewebe eindiffundieren soll, da diese Diffusionslängen unmittelbar abhängig von der Kontaktzeit sind.

Nach Ablauf der erforderlichen Kontaktzeit wird der Hohlkörper in eine Vulkanisationskammer eingeschoben und mit Heizdampf unter erhöhtem Druck ausvulkanisiert. Durch die ansteigende Druckdifferenz von ursprünglich 1 Bar auf etwa 6—7 Bar ergibt sich eine noch bessere Verschweißung der Nähte, die dann gleichzeitig durch die Vulkanisation verfestigt werden. Die verwendeten

2

Gewebe, nämlich das Doppelgewebe oder auch die Deckgewebebahnen, können aus üblichen Materialien, wie beispielsweise Polyester, Polyamid oder Aramid hergestellt werden. Auch die bisher üblichen Kautschukmischungen können eingesetzt werden.

Als Haftvermittler zwischen den zu verbindenden Schichten und Rändern werden besonders gute Eigenschaften mit NK/CR-Lösungen erzielt, deren Wirkung durch Desmodurzusatz noch verstärkt werden kann.

Dabei ergibt sich durch das Hineinsaugen der Gummischichten in das Gewebe überdies ein Gummi-Gewebe-Verbund erheblich besserer Haftfestigkeit und eine optisch bessere Beschaffenheit der großflächigen Oberflächen, wobei es in zahlreichen Fällen möglich ist, auf die sonst übliche Streichlösung zur Verbesserung der Gewebehaftung oder sogar auf die Verwendung von Klebelösungen zu verzichten.

**Patentansprüche**

1. Verfahren zur Herstellung eines aufblasbaren Hohlkörpers aus einem über Polfäden beabstandeten Doppelgewebe, bei dem auf die Ober- und Unterbahn des Doppelgewebes eine gasdichte Kautschukbahn aufgelegt wird, die Ränder des Doppelgewebes mit einem Haftvermittler versehen und mit Winkelbändern verbunden werden undder Hohlkörper unter Vakuum ausvulkanisiert wird, dadurch gekennzeichnet, daß der Innenraum des vorkonfektionierten, noch unvulkanisierten Hohlkörpers für einen Zeitraum bis zum Erreichen der gewünschten Diffusionslängen evakuiert und der Hohlkörper anschließend im evakuierten Zustand ausvulkanisiert wird.

2. Verfahren nach Anspruch 1, dadurch gekennzeichnet, daß die Luft über ein in die Wandung des Hohlkörpers eingesetztes, wärmestandfestes und vakuumdichtes Ventil abgesaugt wird.

3. Verfahren nach Anspruch 1, dadurch gekennzeichnet, daß die Kautschukbahn mit einem Gewebe verstärkt ist.

**Revendications**

1. Procédé de fabrication d'un objet creux gonflable à partir d'un tissu double pièce, entretoisé par des fils de poils, qui consiste à appliquer, sur le lé supérieur et sur le lé inférieur, du tissu double pièce, un lé en caoutchouc étanche au gaz, à munir les bords du tissu double pièce d'un agent adhésif et à les relier à des bandes d'angle et à vulcaniser l'objet creux sous vide, caractérisé en ce qu'il consiste à faire le vide à l'intérieur de l'objet creux préconfectionné, mais encore non vulcanisé, pendant une certaine durée, jusqu'à obtention de la longueur de diffusion souhaitée, et à vulcaniser ensuite l'objet creux à l'état sous vide.

2. Procédé suivant la revendication 1, caractérisé en ce qu'il consiste à aspirer l'air par un clapet résistant à la chaleur, étanche au vide et ménagé dans la paroi de l'objet creux.

3. Procédé suivant la revendication 1, caractérisé en ce qu'il consiste à renforcer le lé en caoutchouc d'un tissu.

**Claims**

1. Method of manufacturing an inflatable hollow body from a double fabric spaced via pile threads, wherein a gas-tight rubber strip is laid over the upper and lower strip of the double fabric, the edges of the double fabric are provided with an adhesive and are joined with angle bands, and the hollow body is fully vulcanised under vacuum conditions, characterised in that the interior of the pre-fabricated, as yet unvulcanised hollow body is evacuated until the desired diffusion lengths are obtained and the hollow body is then vulcanised in the evacuated state.

2. Method according to claim 1, characterised in that the air is sucked out via a temperature-resistant vacuum-tight valve set in the wall of the hollow body.

3. Method according to claim 1, characterised in that the rubber strip is reinforced with a fabric.